# EUROPEAN PATENT SPECIFICATION

(11) **EP 3 667 678 B1**
(45) Date of publication and mention of the grant of the patent: **01.09.2021**
(21) Application number: 19209341.7
(22) Date of filing: 15.11.2019
(51) Int. Cl.: G21C 9/004, F16K 17/00, F16K 31/08, G21C 13/02, G21C 15/18

(54) **DEPRESSURISATION VALVE**
DRUCKENTLASTUNGSVENTIL
SOUPAPE DE DÉPRESSURISATION

(30) Priority: 13.12.2018 GB 201820330
(43) Date of publication of application: 17.06.2020
(73) Proprietor: Rolls-Royce plc, London N1 9FX (GB)
(72) Inventor: Shearer, Brenton, Derby, Derbyshire DE24 8BJ (GB)
(74) Representative: Rolls-Royce plc

(56) References cited:
- WO-A1-95/24719
- US-A- 5 085 825
- US-A- 5 447 174

## Description

### Field of the Disclosure

The present disclosure concerns a passive depressurisation valve for a nuclear reactor.

### Background of the Disclosure

Nuclear reactors are a desirable addition to a power grid as they present ideal base load stations. This is because they are considered a low carbon source of electricity and are not dependent upon variable weather conditions, which are limiting factors for other low carbon sources. These features allow them to be used as the backbone of a complete electricity network. One of the most common types of nuclear reactors used around the world is the pressurised water reactor (PWR) in which a primary circuit of pressurised water is used as the coolant, moderator and as well as the heat transfer fluid to the steam generator. The relative simplicity of the system provides them with the advantage that these systems can be scaled. Consequently, they are suitable for both large scale power plants as well as for small modular reactors. However, as with all nuclear power stations they require a robust safety system to prevent accidents.

Modern safety systems for nuclear reactors aim to be both active and passive. Active systems operate under the control of an operator and/or running systems, such as pumps and generators, which in normal operation are associated with emergency control. Passive safety systems do not require any external operator input or active systems running in order to operate. This latter system is beneficial as it allows for automatic self-control of the system that is not requisite on external power or user input. In emergency situations this is desirable as, in certain cases, power to the reactor may be disrupted or it may not be possible for operators to control the system manually in which case passive control systems allow the system to remain safe.

In the case of a pressurised water reactor one of the main safety concerns is a Loss of Coolant Accident (LOCA) event, in which the cooling water entering into the reactor is lost and would, if not rectified, lead to the failure of a nuclear reactor. This is because without the coolant, the heat produced by the radioactive decay within the fuel rods of the reactor would increase to a point at which the reactor is damaged. This could result in a serious nuclear incident. One of the ways that this can occur is if the coolant boils, which can lead to the melt of the fuel clad and the release of the fission products. Consequently, to prevent this from happening nuclear reactors are equipped with emergency cooling systems that can replace the cooling water if there is a fault. In a PWR the system to protect against this is known as the Emergency Core Cooling System (ECCS). These systems typically involve the opening of pipelines to discharge the present reactor coolant. The discharge pipework for this is engineered to provide sufficient capacity to remove the heated coolant, whilst maintaining a low reactor circuit pressure. In order to replace this discharged coolant, fresh coolant is injected, under the force of gravity, into the system. These discharge pipelines are normally isolated from the reactor using isolation vales, which can be opened upon the detection of a LOCA. Typically this involves instrumentation to monitor the parameters of the plant, a control system to generate initiation signals on reaching set points and valve actuators to change the valve positions.

Systems to achieve this isolation of the coolant from the emergency supply of cooling fluid in the event of a LOCA are known in the art. Accumulator Isolation Passive Valve (AIPV) are used to isolate the pressurised accumulator at 55 bar and the core at 70 bar during normal operation when there is a reduction of pressure in the reactor circuit, the valve opens proportional to the difference in pressure between the accumulator located upstream and the reactor circuit and the core downstream. For the AIPV, since the valve position is proportional to the pressure difference, once the pressure equalises, either due to a recovery of reactor circuit pressure or from a discharge of accumulator pressure, the valve shuts, isolating the line once again. The valve therefore does not remain latched open to allow for complete system depressurisation. Alternatively, an Automatic Safety Valve for Accumulator Depressurisation (ASVAD) valve can be used.

These are used to vent gas from the gas space of an accumulator by opening a valve when the force applied from the pressure in the system drops below a level, which is set by the force applied by the spring acting on the valve plunger. The ASVAD valve is not an isolation valve in the usual sense, but is specifically designed for the venting of gas. As such, it is not suitable for the isolation of high pressure, high temperature water. As neither valve operates based upon temperature and could not open in the event of an intact circuit fault transient in which the system pressure and temperature rise, as such improvements are required. The AP1000 reactor design by Westinghouse features a valve for discharging the heated coolant - termed the Squib Valve. The Squib valve is equipped with an explosive charge that is used to open the valve; however, spurious operation of the squib valve could result in a major radiological hazard. Consequently, the safety justification of the plant design is dependent upon a highly reliable Control and instrumentation (C&I) system to prevent spurious operation, and as such adds significant cost to the plant design. As such there is a desire to develop a simplified passive valve to allow for depressurisation of the coolant circuit.

WO 9524719 A1 describes a depressurisation system including at least one valve structure intended to open at a predetermined pressure which corresponds to the substantial emptying of a tank.

US 5447174 A describes a pilot stage for a pressure control valve that controls the opening of the main stage such that pressure losses and relief shocks are averted. With this pressure control valve, a slow response of the main stage to the control signal for pressure relief is guaranteed.

US 5085825 describes a standby safety injection system for water cooled, nuclear fission reactor plants with a supplementary water coolant provided with a float operated valve.

### Summary of the Disclosure

According to the invention there is provided a depressurisation valve for a coolant system, as claimed in claim 1. The depressurisation valve comprises a main chamber having a main valve, pilot line and a blowdown line having a secondary valve; wherein the main valve being located to seal a coolant line of the coolant system, the main chamber being located downstream of the cooling system, the main chamber being filled with fluid from the coolant system via the pilot line, the pressure of fluid in the main chamber acts upon a piston head of the main valve and causes it to open or close dependent upon the fluid pressure in the main chamber, and wherein fluid can escape from the main chamber via the blowdown line, which has a variable fluid resistance depending upon operating state of the secondary valve, and wherein the secondary valve is opened automatically dependent upon the conditions within the coolant system.

The coolant system can for example be the coolant system for a nuclear reactor. The benefit of this design is that the valve can open automatically in the presence of steam in the coolant line. This allows the ECCS to function and thus increases the safety of the system.

According to the invention, the secondary valve opens in the presence of steam in the coolant system.

According to the invention, the secondary valve is a float valve.

The float valve may feature a holding cage.

The main valve may be located upstream of an automatic isolation valve.

The automatic isolation valve may be operated by the plants Control and Instrumentation system.

The main valve may be spring actuated.

The depressurisation valve may be used on the coolant system of a nuclear reactor.

One embodiment of the invention is a coolant system that includes the depressurisation valve as discussed previously.

### Brief description of the Drawings

Embodiments will now be described by way of example only, with reference to the following Figure, in which:
**Figure 1** is a schematic of a depressurisation valve of the present disclosure;
And **Figure 2** is a schematic of an alternative depressurisation valve of the present disclosure.

### Detailed Description

Emergency core cooling systems (ECCS) are provided to ensure the safe shutdown of a nuclear reactor when accident conditions arise. The cooling system is configured to provide a safety mechanism in the event of a variety of accident conditions. There are a number of sub-systems that go into forming the ECCS, each having redundancies, so that the reactor can be safely shutdown even if there is a failure in one of the sub-systems. Of particular interest here are the passive systems, such as the Automatic Depressurisation System (ADS), which consists of two valves that open to depressurise the main coolant system and to allow the lower pressure emergency coolant systems to function. Because the low pressure coolant injection systems have larger cooling capacities than the high pressure systems the efficient operation of these in shutting down the reactor is very important.

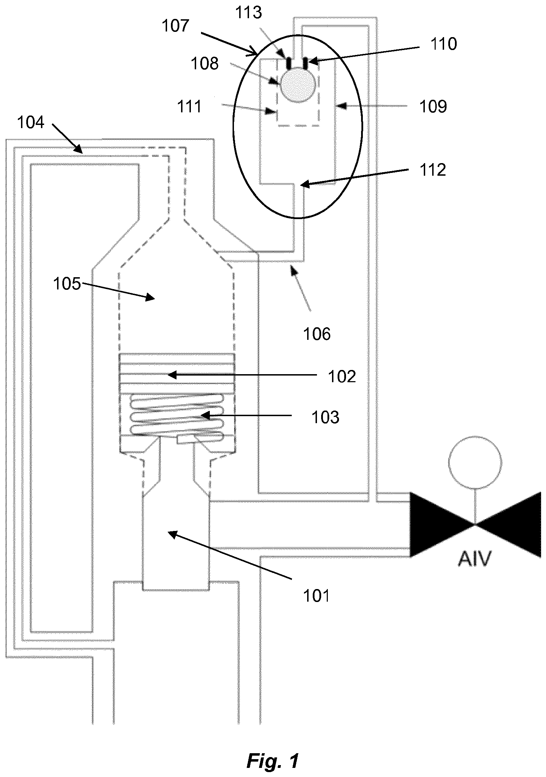

A Passive Depressurisation (PaD) Valve is normally a shut valve, which lies in the discharge pipe lines extending from the reactor circuit. It provides a second and diverse method of isolation from other control system initiated/actuated isolation valves which are located in the same discharge line. The PaD valve is designed to open upon a detection of a change of state in the coolant. This could be a change from the coolant being a fluid to a gas, for example this could be the transition from water to steam. **Figure 1** shows an example of a buoyancy operated depressurisation valve BOPaD as presented in the present disclosure. The BOPaD valve is positioned downstream of the pressurised water system of the nuclear reactor. It is coupled with an Automatic Isolation Valve (AIV) which is operated by the plant control and instrumentation (C&I) system. The BOPaD valve is typically configured to be in the closed position, and as such the automatic opening of the valve acts as a safety mechanism within the pressurised water system. This allows for the water in the main coolant circuit to be drained, such that it can be replaced by the emergency cooling fluid.

The PaD valve 100 as shown in **Figure 1** works by having a pilot line 104 which supplies fluid from the pressurised water system of the main reactor circuit into a main chamber 105. The main chamber 105 contains the main valve 101 with its associated actuation mechanism comprising a piston head and a valve stem 102 and compression spring 103. The high pressure of fluid supplied along the pilot line 104 into the main chamber 105 from the main reactor circuit pushes the valve piston and stem 102 for the valve; this compresses the compression spring 103 that acts upon the main valve and closes the valve. Connected to the main chamber 105 is a blowdown line 106, which has a higher fluid resistance than that of the pilot line. The blowdown line has the higher fluid resistance, whilst the blowdown line is filled with liquid, which results in the float being pressed against the seal, and thus restricting the outlet flow area and increasing the resistance. The compression spring 103 is set such that if the pressure in the main chamber reduces below the force of the spring, the spring will overcome the fluid pressure acting on the piston head, forcing the piston head to move and the main valve to open. This therefore allows the reactor circuit to depressurise.

The blowdown line 106 at the top of the main chamber features a secondary valve 107 that is buoyancy operated. The valve comprises a hollow ball float 108 that is used to seal an opening in the blowdown line. Under the normal operation the presence of fluid in the blowdown line and the float chamber 109 causes the ball to float and cover the hole 110 at the top of the blowdown line. This is because the float is positively buoyant in water and negatively buoyant in gas. The presence of water typically in the secondary valve ensures that the valve remains closed. Consequently, the pressure in the main chamber is maintained and the main valve is closed. However, in the event that steam or gas is present in the fluid line, then this would cause the ball to drop, due to the effect of gravity, and the secondary valve in the blowdown line will open. With the valve being open the fluid flow resistance reduces to below that of the pilot line resistance so that there is a greater out flow than in flow. The pressure in the main chamber is therefore limited by the input through the pilot line, and thus the fluid pressure in the main chamber drops, which results in the main valve opening. A cage 111 may also be present, within the float chamber 109, to contain the float 108 after it drops from its original position, and thus removes the chance of the float falling down into the blowdown line opening 112 into the float chamber 109. A perforated float seal 113 may be used to seal the valve in the normal usage.

By selection of the design considerations regarding the spring constant coupled to the main valve, the spring can be set to open the valve at a pressure well below the full range of operating pressures, so that under normal circumstances the valve remains closed. The advantage of this design is that the opening of the valve is dependent upon the state that the fluid is in within the main chamber rather than the circuit pressure. This results in the valve functioning adequately over a wide range of operating pressures, without affecting valve performance.

In the event of a LOCA causing the upstream fluid pressure to be low, this will result in the upstream fluid changing to from water to steam. The AIV will be set to be opened/tripped by the C&I and de-energised, which will result in its opening. In this event the steam then travels through the pilot line into the main chamber and from there and into the blowdown line. Upon reaching the float chamber the presence of the steam in the float chamber will cause the float ball valve to drop and thus open the valve. The opening of the float valve will result in the pressure dropping in the main chamber and thus opening the main valve. This will allow the system to depressurise as fluid in the system can escape via the discharge line. If the LOCA event happens without the presence of steam then reactor circuit pressure will fall, thus reducing the pressure acting upon the valve piston; thus, allowing the main valve to open.

In the event of a spurious opening of the AIV, the system will still be operating under normal conditions and the pressurised fluid will not turn to steam. As there is no steam present in the system there will be no gas in the float chamber, So the positive buoyancy of the float is maintained and the main valve remains in a closed position. A small amount of fluid may leak from the system, but the fault should be highlighted to an operator so that the fault is present and therefore they can take action to mitigate the minor hazard.

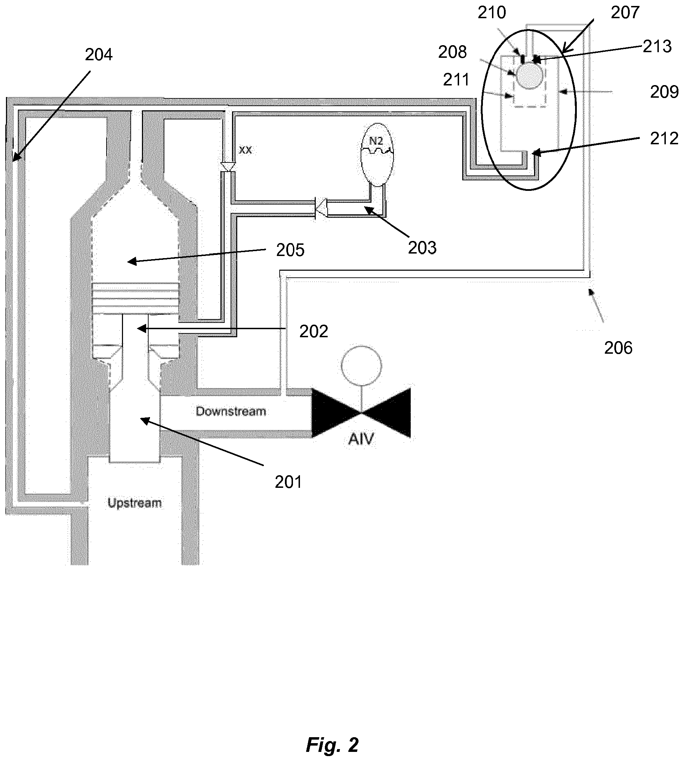

An alternative to this configuration is presented in **Figure 2****.** The buoyancy operated depressurisation valve works by having a pilot line 204 which supplies fluid from the pressurised water system of the main reactor circuit into a main chamber 205. The main chamber 205 contains the main valve 201 with its associated actuation mechanism comprising a piston head and valve stem 202. Instead of the compression spring that was used in Figure 1 an accumulator vessel 203 which is part filled with water, part with gas, set to the required initiation pressure is used. This allows for accurate control of the pressure values for the actuation of the valve. The high pressure of fluid supplied along the pilot line 204 into the main chamber 205 from the main reactor circuit pushes the valve piston and stem 202 for the valve; this pressure is greater than the pressure supplied by the accumulator vessel and as such closes the valve. Connected to the main chamber 205 is a blowdown line 206, which has a higher fluid resistance than that of the pilot line. The accumulator vessel 203 stores a water/gas volume which is used to push on the underside of the piston head and drive the main valve open. This therefore allows the reactor circuit to depressurise.

Similar to Figure 1, the blowdown line 206 at the top of the main chamber features a secondary valve 207 that is buoyancy operated. The valve comprises a hollow ball float 208 that is used to seal an opening in the blowdown line. Under the normal operation the presence of fluid in the blowdown line and the float chamber 209 causes the ball to float and cover the hole 210 at the top of the blowdown line. This is because the float is positively buoyant in water and negatively buoyant in gas. Consequently, the pressure in the main chamber is maintained and the main valve is closed. However, in the event that steam or gas is present in the fluid line would cause the ball to drop, due to the effect of gravity, and the valve in the blowdown line will open. With the valve being open the fluid flow resistance reduces to below that of the pilot line resistance so that there is a greater out flow than in flow. The pressure in the main chamber is therefore limited by the input through the pilot line, and thus the fluid pressure in the main chamber drops, which results in the main valve opening. A cage 211 may also be present, within the float chamber 209, to contain the float 208 after it drops from its original position, and thus removes the chance of the float falling down into the blowdown line opening 212 into the float chamber 209. A perforated float seal 213 may be used to seal the valve in the normal usage. Although the proposed depressurisation valve has been presented in terms of a valve for a pressurisation line for a nuclear power reactor, the person skilled in the art would appreciate that the valve could be applied in any suitable system. For example this could be any industrial application where a liquid filled system needs to be rapidly depressurised or the contents discharged in the event the system contents change phase from liquid to gas/vapour. This could be for example if a tank contains volatile organic components in liquid form and the change to a gaseous state represents a hazard. In this case, it is potentially desirable to discharge the contents to a different location to mitigate the hazard. In such a case no modifications would be required, other than to size and set the trip conditions to the appropriate level.

It will be understood that the invention is not limited to the embodiments above-described and various modifications and improvements can be made without departing from the scope of the invention, which is defined by the following claims.

## Claims

1. A depressurisation valve (100) for a coolant system; comprising:
a main valve (101,201), having a main chamber (105) with an associated actuation mechanism comprising:
a piston head; a valve stem (102,202); a pilot line (104, 204); and a blowdown line (106,206) having a secondary valve (107,108); in use, the main valve being located to seal a coolant line of the coolant system,
in use, the main chamber being located downstream of the coolant system, in use, the main chamber being filled with fluid from the coolant system via the pilot line, in use, the pressure of fluid in the main chamber acts upon a piston head of the main valve and causes the main valve to open or close dependent upon the fluid pressure in the main chamber, and wherein fluid can escape from the main chamber via the blowdown line, which has a variable fluid pressure depending upon an operating state of the secondary valve, and wherein the secondary valve is a float valve (108, 208), configured to open when steam is present in the coolant system.

2. The depressurisation valve as claimed in claim 1 wherein, the float valve features a holding cage (111).

3. A coolant system, comprising the depressurisation valve of claims 1 or 2.

4. The coolant system of claim 3, further comprising an automatic isolation valve (AIV), wherein the main valve is located upstream of the automatic isolation valve.

5. The coolant system, as claimed in claim 4 wherein the automatic isolation valve is operated by a Control and Instrumentation system.

6. The depressurisation valve as claimed in claims 1 or 2, wherein the main valve is spring actuated.

7. The coolant system as claimed in claims 3, 4 or 5 wherein the main valve is actuated by an accumulator vessel (203).

8. A nuclear reactor, comprising the coolant system of claims 3, 4, 5 or 7.

## Patentansprüche

1. Druckentlastungsventil (100) für ein Kühlmittelsystem; umfassend:
ein Hauptventil (101,201), das eine Hauptkammer (105) mit einem assoziierten Betätigungsmechanismus aufweist, umfassend:
einen Kolbenkopf; einen Ventilschaft (102,202); eine Vorsteuerleitung (104, 204); und eine Abblasleitung (106,206), die ein Sekundärventil (107,108) aufweist; wobei sich das Hauptventil in Verwendung befindet, um eine Kühlmittelleitung des Kühlmittelsystems abzudichten, wobei sich die Hauptkammer, in Verwendung, stromabwärts von dem Kühlmittelsystem befindet, wobei die Hauptkammer, in Verwendung, über die Vorsteuerleitung mit Fluid aus dem Kühlmittelsystem gefüllt wird, der Fluiddruck in der Hauptkammer, in Verwendung, auf einen Kolbenkopf des Hauptventils wirkt und bewirkt, dass das Hauptventil in Abhängigkeit von dem Fluiddruck in der Hauptkammer öffnet oder schließt, und wobei Fluid über die Abblasleitung, die einen variablen Fluiddruck in Abhängigkeit von einem Betriebszustand des Sekundärventils aufweist, aus der Hauptkammer entweichen kann, und wobei das Sekundärventil ein Schwimmerventil (108, 208) ist, das konfiguriert ist, um zu öffnen, wenn Dampf in dem Kühlmittelsystem vorhanden ist.

2. Druckentlastungsventil nach Anspruch 1, wobei das Schwimmerventil einen Haltekäfig (111) aufweist.

3. Kühlmittelsystem, umfassend das Druckentlastungsventil nach Anspruch 1 oder 2.

4. Kühlmittelsystem nach Anspruch 3, ferner umfassend ein automatisches Absperrventil (AIV), wobei sich das Hauptventil stromaufwärts von dem automatischen Absperrventil befindet.

5. Kühlmittelsystem nach Anspruch 4, wobei das automatische Absperrventil durch ein Steuer- und Instrumentierungssystem betrieben wird.

6. Druckentlastungsventil nach einem der Ansprüche 1 oder 2, wobei das Hauptventil durch Feder betätigt ist.

7. Kühlmittelsystem nach einem der Ansprüche 3, 4 oder 5, wobei das Hauptventil von einem Speicherbehälter (203) betätigt wird.

8. Kernreaktor, umfassend das Kühlmittelsystem nach Anspruch 3, 4, 5 oder 7.

## Revendications

1. Soupape de dépressurisation (100) pour un système de refroidissement ; comprenant :
une soupape principale (101, 201), ayant une chambre principale (105) avec un mécanisme d'actionnement associé comprenant :
une tête de piston ; une tige de soupape (102, 202) ; une conduite pilote (104, 204) ; et une conduite de purge (106, 206) ayant une soupape secondaire (107, 108) ;
en cours d'utilisation, la soupape principale étant située pour sceller une conduite de refroidissement du système de refroidissement,
en cours d'utilisation, la chambre principale étant située en aval du système de refroidissement, en cours d'utilisation, la chambre principale étant remplie de fluide provenant du système de refroidissement via la conduite pilote, en cours d'utilisation, la pression du fluide dans la chambre principale agit sur une tête de piston de la soupape principale et provoque l'ouverture ou la fermeture de la soupape principale en fonction de la pression du fluide dans la chambre principale, et dans laquelle le fluide peut s'échapper de la chambre principale via la conduite de purge, qui a une pression de fluide variable en fonction d'un état de fonctionnement de la soupape secondaire, et dans laquelle la soupape secondaire est une soupape à flotteur (108, 208), configurée pour s'ouvrir lorsque de la vapeur est présente dans le système de refroidissement.

2. Soupape de dépressurisation selon la revendication 1, dans laquelle la soupape à flotteur présente une cage de maintien (111).

3. Système de refroidissement, comprenant la soupape de dépressurisation des revendications 1 ou 2.

4. Système de refroidissement selon la revendication 3, comprenant en outre une soupape d'isolement automatique (AIV), dans lequel la soupape principale est située en amont de la soupape d'isolement automatique.

5. Système de refroidissement selon la revendication 4, dans lequel la soupape d'isolement automatique est actionnée par un système de contrôle et d'instrumentation.

6. Soupape de dépressurisation selon les revendications 1 ou 2, dans laquelle la soupape principale est actionnée par ressort.

7. Système de refroidissement selon les revendications 3, 4 ou 5, dans lequel la soupape principale est actionnée par un récipient accumulateur (203).

8. Réacteur nucléaire, comprenant le système de refroidissement des revendications 3, 4, 5 ou 7.
